# EUROPEAN PATENT SPECIFICATION

(11) **EP 0 898 866 B1**
(45) Date of publication and mention of the grant of the patent: **09.04.2003**
(21) Application number: 98100406.2
(22) Date of filing: 12.01.1998
(51) Int. Cl.: A01C 11/02

(54) **Selecting and transporting apparatus for seedlings with soil and transplanting machine using the same**
Vorrichtung zur Selektion und zum Transport von Sämlingen in Erdballen und damit vorsorgte Verpflanzmaschine
Dispositif de sélection et transport de plantes en mottes et machine pour transplanter l'utilisant

(30) Priority: 28.08.1997 JP 23272797
(43) Date of publication of application: 03.03.1999
(73) Proprietor: Circle Tekko Co., Ltd., Takikawa-shi, Hokkaido (JP)
(72) Inventor: Shokaku, Michihiro, Takikawa -shi, Hokkaido (JP); Mikawa, Isao, Takikawa -shi, Hokkaido (JP)
(74) Representative: Hering, Hartmut, Dipl.-Ing.

(56) References cited:
- EP-A- 0 135 004
- EP-A- 0 789 988
- US-A- 4 156 395
- US-A- 4 854 802
- PATENT ABSTRACTS OF JAPAN vol. 096, no. 002, 29 February 1996 & JP 07 250511 A (HOKUEI:KK), 3 October 1995
- PATENT ABSTRACTS OF JAPAN vol. 017, no. 571 (C-1121), 18 October 1993 & JP 05 168310 A (KASAHARA KOGYO KK), 2 July 1993
- PATENT ABSTRACTS OF JAPAN vol. 015, no. 337 (C-0862), 27 August 1991 & JP 03 130003 A (HOKUEI:KK), 3 June 1991
- PATENT ABSTRACTS OF JAPAN vol. 015, no. 337 (C-0862), 27 August 1991 & JP 03 130002 A (HOKUEI:KK), 3 June 1991
- PATENT ABSTRACTS OF JAPAN vol. 014, no. 014 (C-674), 12 January 1990 & JP 01 257403 A (SAAKURU TEKKO:KK), 13 October 1989

## Description

The present invention relates generally to a seedling with soil selecting and transporting apparatus for a transplanting machine which automatically transplants seedling with soil, such as paper potted seedling grown in a cardboard tube, a potted seedling grown in a pot or a tray, to a farm field. More specifically, the invention relates to a seedling with soil selecting and transporting apparatus for a transplanting machine which can select good seedling with soil which has leaf portion grown to reach a normal length, and no good seedling with soil having leaf portion not grown to the normal length or no leaf.

Japanese Examined Utility Model Publication (Kokoku) No. 2-29843 discloses a seedling with soil selecting and transporting apparatus for a transplanting machine of the type set forth above.

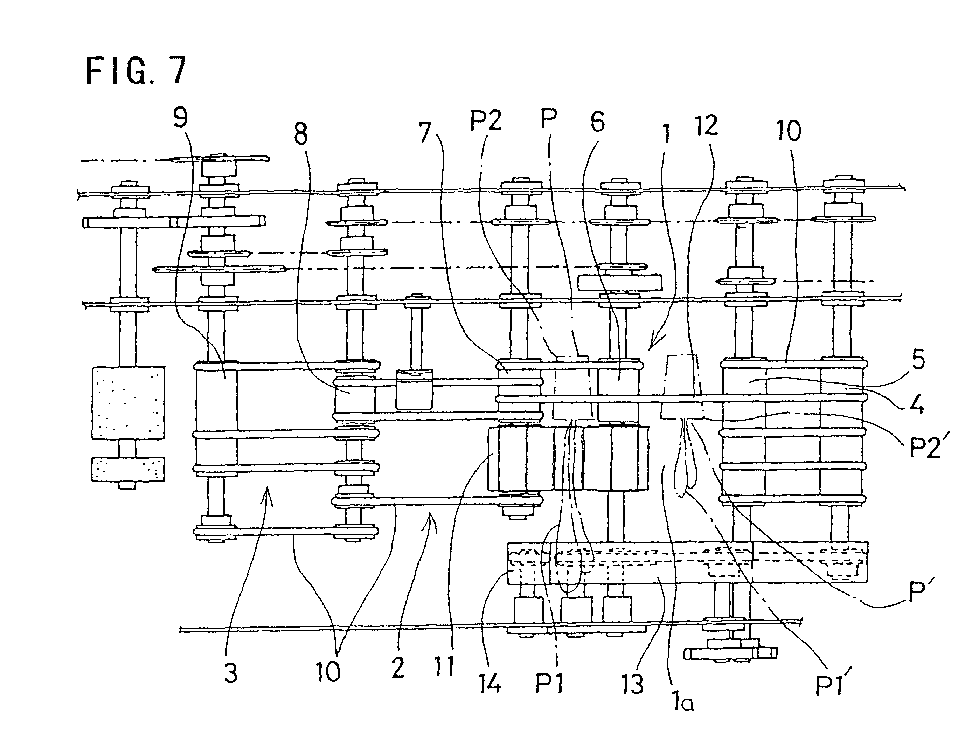

Fig. 7 shows the seedling with soil selecting and transporting apparatus for the transplanting machine disclosed in the above-identified publication. As shown in Fig. 7, a seedling selecting and transporting conveyer 1 selecting good paper potted seedling P having leaf portion P1 grown to a normal length and no good paper potted seedling P' having leaf portion P1' not grown to the normal length, a seedling supply conveyer (not shown) supplying the good and no good paper potted seedling P and P' to the seedling selecting and transporting conveyer 1, a transporting conveyer 2 and a seedling aligning and transporting conveyer 3 transporting the selected good paper potted seedling P to a seedling planting mechanism are arbitrarily arranged along a transporting path.

Each of the foregoing conveyers 1 to 3 is constructed by stretching a plurality of round string belts 10 ... between parallel pulleys 4 to 9. Particularly, the seedling selecting and transporting conveyer 1 includes a belt 11 with awing strip, one strip form belt 12 mounting soil depositing portions P2, P2' of the good and no good paper potted seedling P and P', and a pair of wide belts 13 and 14 arranged for clamping only leaf portion P1 of the good paper potted seedling P, namely the leaf portions P1 grown to the normal length, from the upper and lower sides thereof, in addition to the pulleys and the round string belts 10 ...

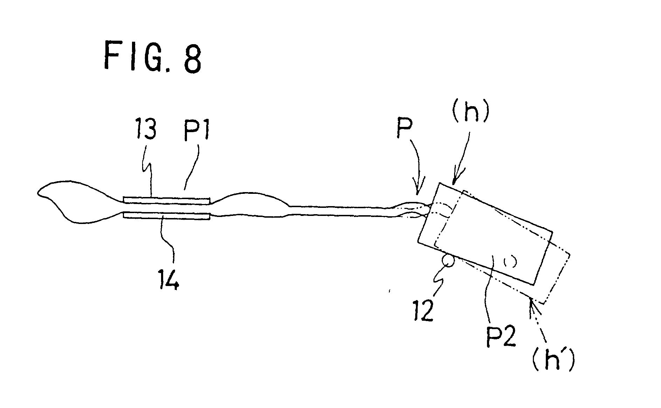

Selection of the good paper potted seedling P and the no good paper potted seedling P' by the seedling selecting and transporting conveyer 1 is performed by mounting the soil depositing portion P2 and P2' of the good paper potted seedling P and the no good paper potted seedling P' on one strip form belt 12, as shown in Fig. 8.

Namely, when the paper potted seedling transported is the good paper potted seedling P, they can be transported in the condition fallen sideways with clamping the leaf portion by a pair of upper and lower wide belts 13 and 14. On the other hand, when the paper potted seedling transported is the no good paper potted seedling P', they may fall down into a hollow space 1a since the wide belts 13 and 14 cannot clamp the leaf portion.

However, since the conventional seedling with soil selecting and transporting apparatus is constructed by exposing the pulleys 4 to 9, the round string belts 10 ... and the belt 11 with the wing strip, clump of earth may deposit on the pulley or so forth to easily cause round string belts to loose off the pulleys. Furthermore, since each conveyers 1 to 3 are formed by combination of the pulleys and the round string belts to make construction complicate.

Also, in the seedling selecting and transporting conveyer 1, selective transportation is performed in the condition fallen sideways (h) mounting the soil depositing portion on one strip form belt 12 with clamping the leaf portion P1 of the good paper potted seedling P by the wide belts 13 and 14, and in conjunction therewith, balance may be easily destroyed even by slight offset of the position of the soil depositing portion P2 to be mounted on the strip form belt 12. For example, even by vibration caused associating with traveling of the transporting machine, the soil depositing portion P2 may be slip off the strip form belt 12 to place the seedling in outwardly drooped condition (h') (see Fig. 8). Furthermore, tendency of destroying of balance becomes higher for shorter length of the soil depositing portion P2.

In the condition where the soil depositing portion P2 droops outwardly from the strip form belt 12 (h'), the good paper potted seedling P is transported in the condition where the leaf portion P1 is clamped between the wide belts 13 and 14. Therefore, when good paper potted seedling P is transferred from the seedling selecting and transporting conveyer 1 to the transfer conveyer 2, the drooping soil depositing portion P2 collides to the pulley 6 or so forth of the transfer conveyer 2 to potentially cause difficulty in transferring the transfer conveyer 2.

Furthermore, even when the good paper potted seedling P can be transferred to the transfer conveyer 2 in the condition drooping the soil depositing portion P2, the soil depositing portion P2 may collide on the pulley 6 or so forth of the transfer conveyer 2 to cause delay of the transfer timing of the soil depositing portion P2 from the transfer timing of the leaf portion P1. In other words, the leaf portion P1 of the good paper potted seedling P is transferred in the attitude tilted toward the downstream side in the transporting direction in relation to the soil depositing portion P2. Thus, the good paper potted seedling P contacts with other good paper potted seedling transferred preceding and following the objective good paper potted seedling to possibly disturb alignment condition thereof. This results in difficulty of normal transplanting operation.

EP-A-0 789 988 discloses a selecting and transporting apparatus according to the preamble of claim 1.

It is the object of the present invention to provide a selecting and transporting apparatus for a transplantation machine which transplants seedlings with soil and leaf portions, which apparatus can steadily and certainly discriminate good seedling with soil and no good seedling with soil without causing operation failure by deposition of clump of earth even if external vibration and/or slight disturbance is caused in transporting attitude of the seedling with soil, and can have simple construction.

This object is solved by the selecting and transporting apparatus as defined in the independent claim 1. The dependent claims 2 to 9 show advantageous further developments of the selecting and transporting apparatus of claim 1.

The present invention will be understood more fully from the detailed description given herebelow and from the accompanying drawings of the preferred embodiment of the present invention, which, however, should not be taken to be limitative to the invention, but are for explanation and understanding only.

In the drawings:
Fig. 1 is a side elevation of a transplanting machine, on which the first embodiment of a seedling with soil selecting and transporting apparatus according to the present invention is shown;
Fig. 2 is an enlarged plan view of the first embodiment of the seedling with soil selecting and transporting apparatus;
Fig. 3 is an enlarged front elevation of the first embodiment of the seedling with soil selecting and transporting apparatus according to the invention;
Fig. 4 is an explanatory illustration showing operation for selecting good and no good seedling with soil;
Fig. 5 is an enlarged plan view of the second embodiment of a seedling with soil selecting and transporting apparatus according to the present invention;
Fig. 6 is an enlarged front elevation of the second embodiment of the seedling with soil selecting and transporting apparatus according to the invention;
Fig. 7 is a plan view showing the major portion of the conventional seedling with soil selecting and transporting apparatus; and
Fig. 8 is an explanatory illustration showing operation of selection of the seedling with soil by the conventional seedling with soil selecting and transporting apparatus.

The present invention will be discussed hereinafter in detail in terms of the preferred embodiment of the present invention with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to avoid unnecessary obscure the present invention.

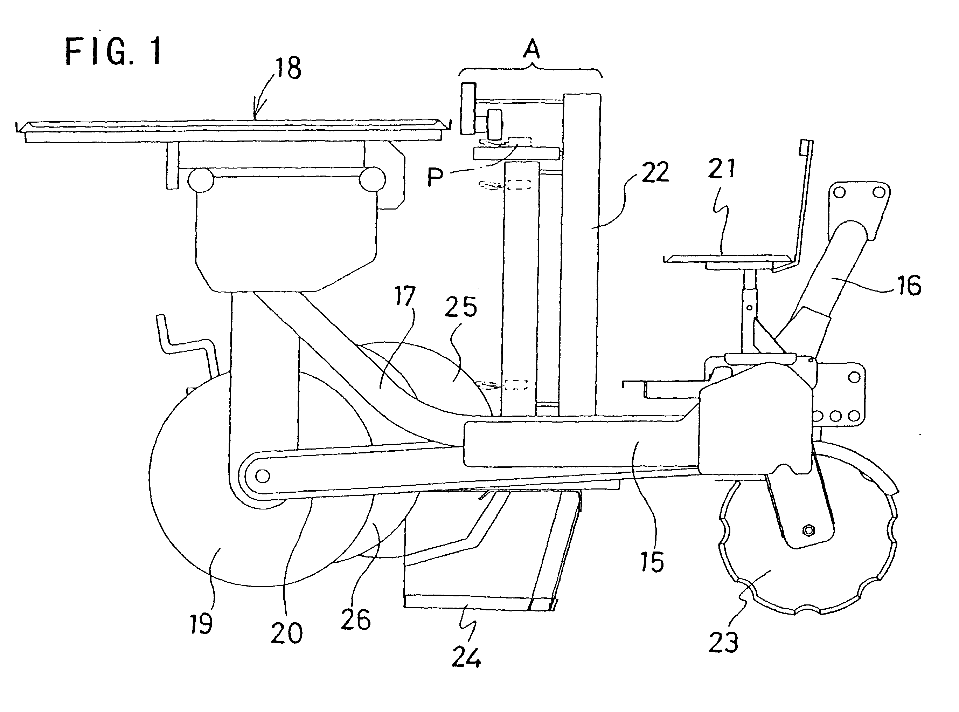

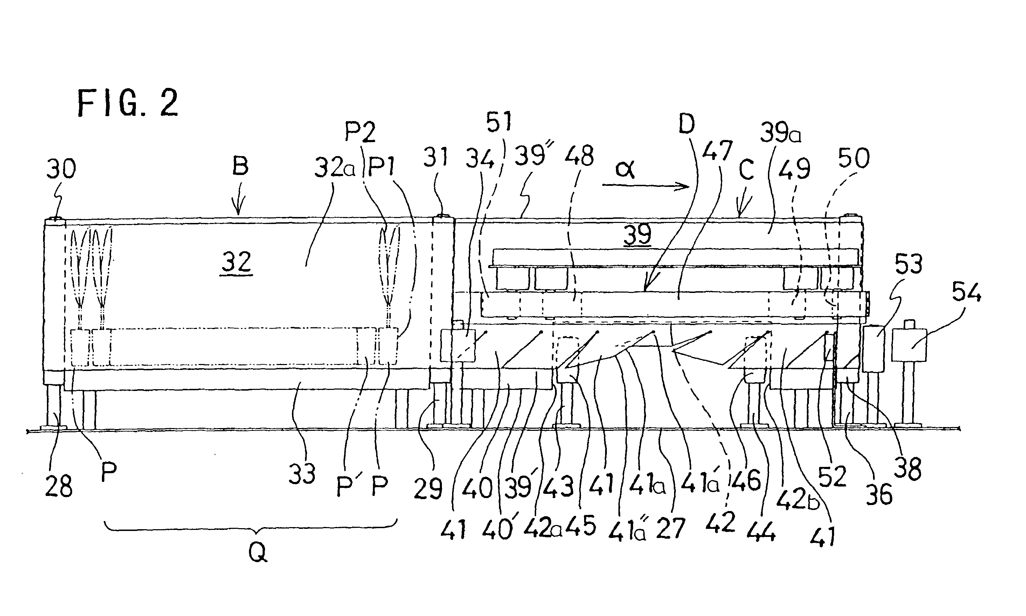

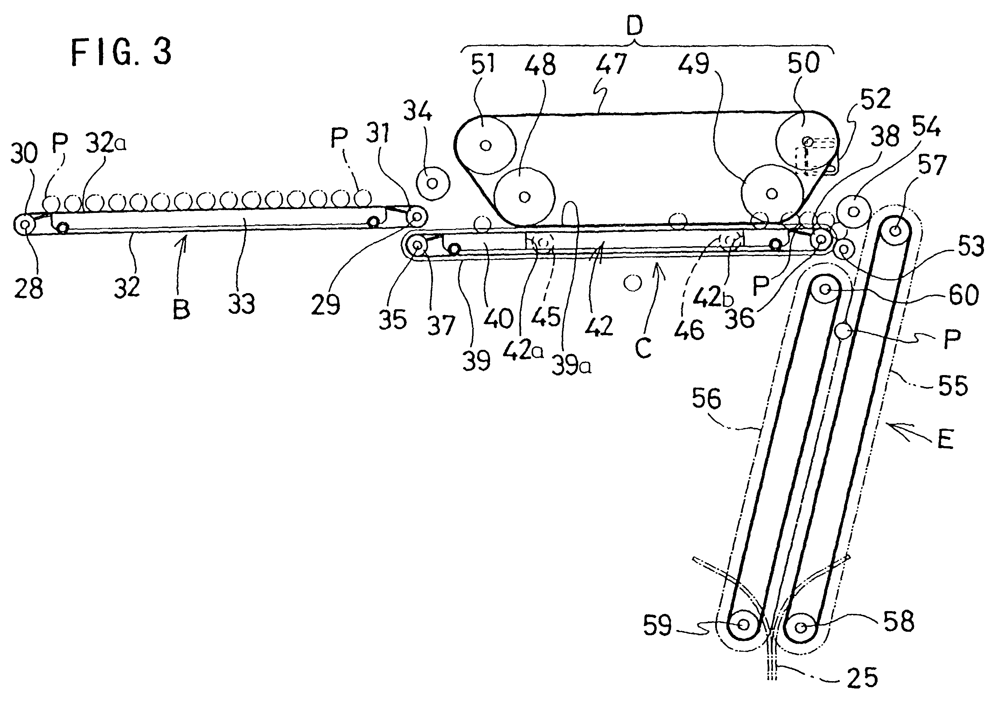

Fig. 1 is a side elevation of a transplanting machine, on which the first embodiment of a seedling with soil selecting and transporting apparatus according to the present invention, Fig. 2 is an enlarged plan view of the first embodiment of the seedling with soil selecting and transporting apparatus, and Fig. 3 is an enlarged front elevation of the first embodiment of the seedling with soil selecting and transporting apparatus according to the invention.

The reference numeral 15 denotes a main frame of a transplanting machine, 16 denotes a front frame mounted on the front end portion of the main frame, 17 denotes a movable frame mounted for vertical pivotal movement about the front frame 16 (Fig. 1).

On the rear end portion of the movable frame 17, a seedling base 18, on which a seedling with soil group consisted of good and no good seedling with soil, such as paper potted seedling, potted seedling and the like, is mounted. A driving wheel 19 is mounted on the lower portion of the movable frame 17. The reference numeral 20 denotes a chain transmitting a driving force to the driving wheel 19. It should be noted that, on the seedling base 18, a seedling tray, in which a plurality of cells for receiving the good and no good seedling with soil P and P' are formed, is mounted.

On the end portion of the front frame 16, a seat 21 for an operator is rigidly secured. In opposition to the seat 21, a seedling with soil selecting and transporting apparatus A according to the present invention is situated, which selects and transfers the good and no good seedling with soil P and P' taken from the seedling base 18. Also, a driving mechanism 22 supporting the seedling with soil selecting and transporting apparatus A is vertically provided on the intermediate portion of the movable frame 17.

In the movable frame 17, a rolling coulter 23, an opener 24, a planting unit 25 and a press down wheel 26 pressing down the implanted good seedling with soil P are arranged in sequential order from the front end portion to the rear portion.

The construction of the seedling with soil selecting and transporting apparatus A is as follows.

The reference sign B denotes a seedling supply conveyer. The seedling supply conveyer B is constructed by stretching a predetermined width of strip form supply belt 32 between a pair of belt stretching rollers 30 and 31 mounted on shafts 28 and 29 supported on one end portion and an intermediate portion of a machine frame 27.

On the seedling supply conveyer B, a plurality of seedling with soil train Q, in which good and no good seedling with soil P and P' are present, are mounted on the strip form supply belt 32 in a condition fallen sideways for transporting the seedling with soil toward seedling with soil selecting and transporting conveyer C which is arranged at the transporting terminating end side of the strip form supply belt 32.

The reference numeral 33 denotes a belt holding plate arranged between the belt stretching rollers 30 and 31 and holds the lower side of the strip form supply belt 32 so that the upper traveling portion 32a of the strip form supply belt 32 becomes a flat surface, and 34 denotes seedling clamping rollers rotatably supported in the upper side of the transporting terminating end of the strip form supply belt 32.

The good and no good seedling with soil P and P' transported by the strip form supply belt 32 is transferred to the seedling with soil selecting and transporting conveyer C with being clamped by the seedling clamping rollers 34 arranged at the transporting terminating end portion of the strip form supply belt 32.

The seedling with soil selecting and transporting conveyer C is constructed by stretching strip form transporting belt 39 made of elastic member, such as rubber and so forth, for example, which strip form transporting belt 39 has the same width as the strip form supply conveyer 32 of the seedling supply conveyer B, between a pair of belt stretching rollers 37 and 38 mounted on shafts 35 and 36 supported on the machine frame 27.

The shaft 35 mounting the belt stretching roller 37 is arranged below the shaft mounting the belt stretching roller 31 of the seedling supply conveyer B. On the other hand, the shaft 36 mounting the belt stretching roller 38 is arranged on the upper end of inlet of a seedling transporting conveyer E which will be discussed later.

Between a pair of belt stretching rollers 37 and 38, a belt holding plate 40 is arranged at the lower side of the strip form transporting belt 39 for supporting the upper traveling portion 39a thereof so that the upper traveling portion 39a can be maintained to have a flat surface.

Among both outer side edge portions 39' and 39" located at both outer sides of the strip form transporting belt 39 in the width direction, a plurality of seedling with soil slip down pieces 41 ... the size for mounting the soil depositing portions P2 and P2' of the good and no good seedling with soil P and P', are formed in alignment on one of the outer side edge portion 39'.

The seedling with soil slip down piece 41 is formed on one of the outer edge portions 39' of the strip form transporting belt 39 with placing the front side end edge 41a in the traveling direction α of the strip form transporting belt 39 at a position so that a base end portion 41a' is inclined frontwardly from the outer end portion 41a" in the traveling direction α. With such construction, the seedling with soil slip down piece 41 is gradually deflected toward the outer end portion 41a" from the base end portion 41a' of the front side edge 41a to be wrapped around the belt stretching roller 38. Accordingly, when the aligning roller 53 which will be discussed later, is arranged in the vicinity of the belt stretching roller 38, traveling of the strip form transporting belt 39 is smoothly performed without contacting with the aligning roller 53.

The belt holding plate 40 is a plate form body of a rectangular shape in plan view. On the side of one edge 40', a seedling dropping opening 42 in a channel shaped configuration in plan view, can be formed.

In the seedling dropping opening 42, slip down piece supporting rollers 45 and 46 mounted on shafts 43 and 44 are supported on the machine frame 27 in the closest positions of inner sides of these opposing end edge portions 42a and 42b.

By this, the seedling with soil slip down piece 41 becomes an attitude obliquely downwardly deflected due to own weight with gradually shifting toward the seedling dropping opening 42 according to traveling of the strip form transporting belt 39 while supported by the slip down piece supporting roller 45.

On the other hand, the seedling with soil slip down piece 41 shifted into the seedling dropping opening 42 and deflected in obliquely downward, is moved outward of the seedling dropping opening 42 as supported by the slip down piece supporting roller 46, and in conjunction therewith, gradually returned to horizontal attitude as being supported by the belt holding plate 40.

It is also possible to design the seedling with soil slip down piece 41 not to deflect downwardly by the own weight but to deflect only when the good and no good seedling with soil P and P' are mounted.

The reference sign D is denoted a seedling clamping conveyer. Clamping belts 47 are located at a position for clamping only leaf portion P1 of the good seedling with soil portion P grown to the normal length and in opposition to the upper traveling portion 39a of the strip form transporting belt 39. The clamping belts 47 are stretched over four belt stretching rollers 48 to 51 respectively arranged at peak positions of a trapezoidal shape in front elevation.

The reference numeral 52 denotes a contactless sensor arranged at a transportation terminating end portion of the strip form transporting belt 39. The contactless sensor detects crowding condition of the good seedling with soil P on the strip form transporting belt. On the basis of the result of detection, traveling speeds of the strip form transporting belt 39 and the strip form supply belt 32 are adjusted via electromagnetic clutch or so forth so that a proper number of good seedling with soil P is constantly mounted on the strip form transporting belt 39.

The reference numerals 53 and 54 are aligning roller and a seedling holding roller supported in front of the transportation terminating end portion of the strip form transporting belt 39. The good seedling with soil P fed out from the transportation terminating end portion is guided by both rollers 53 and 54 to be supplied to the upper end portion of the seedling transferring conveyer E.

The seedling transferring conveyer E is constructed with a pair of transfer belts 55 and 56 and belt stretching rollers 57 to 60, around which the transfer belts 55 and 56 are stretched, for transferring the good seedling with soil fed out between the aligning roller 53 and the seedling holding roller 54 to supply to the planting unit 25. The upper end of one of the transfer belt 55 is located in the vicinity of the transportation terminating end portion of the strip form transporting belt 39 in opposition thereto. The good seedling with soil P received on the upper end is slightly transported downwardly and then clamped between the transfer belts 55 and 56, and is transferred toward the planting unit 25 in a condition clamped between the transfer belts 55 and 56.

Next, discussion will be given with respect to operation of the seedling with soil selecting and transporting apparatus constructed as set forth above.

The seedling with soil train Q including good and no good seedling with soil P and P' mounted on the seedling supply conveyer B is pushed and transferred by seedling holding roller 34 arranged at the transportation terminating end of the strip form supply belt 32.

These good and no good seedling with soil P and P' is supplied to the transportation starting end of the strip form transporting belt 39 of the seedling with soil selecting and transporting conveyer C. The good and no good seedling with soil P and P' are sequentially transported toward the seedling dropping opening 42 in the condition where soil depositing portions P2 and P2' of the good and no good seedling with soil P and P' are placed on the seedling with soil sliding down pieces 41 on one of the outer edge portion 39' of the strip form transporting belt 39.

The good seedling with soil P is clamped the leaf portion P1 by the clamping belt 47 of the seedling clamping conveyer D and the strip form transporting belt 39 before reaching to the seedling drop down opening 42 and is transported toward the seedling drop down opening 42 in the clamped condition.

On the other hand, the no good seedling with soil P' is transported toward the seedling drop down opening 42 without being not clamped the leaf portion P' by the clamping conveyer 47 of the seedling clamping conveyer D.

When the good and no good seedling with soil P and P' reaches the end edge 42a of the seedling drop down opening 42, the seedling with soil slip down pieces 41 starts to downwardly and obliquely deflect due to own weight and weight of the soil depositing portions P2 and P2' of the good and no good seedling with soil P and P'.

According to increasing of deflection magnitude of the seedling with soil slip down piece 41, a force acting downwardly perpendicular to the soil depositing portions P2 and P2' is increased. Then, the good and no good seedling with soil P and P' is inclined to slip down along the seedling with soil slip down piece 41 from the side of the soil depositing portion P2 and P2'.

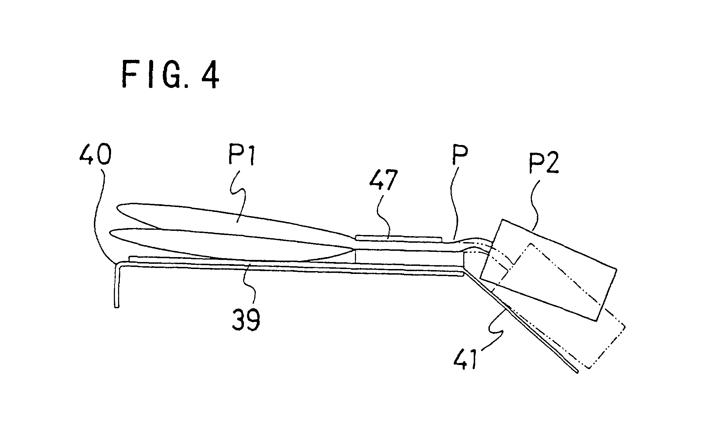

In this case, the good seedling with soil P is clamped the leaf portion P1 by the clamping belt 47 upon being about slipping into the seedling drop down opening 42 from the soil depositing portion P2, so as not to drop into the seedling drop down opening 42. Therefore, the good seedling with soil P is transported up to the transportation terminating end portion according to traveling of the strip form transporting belt 39 with falling into the seedling drop down opening 42 (Fig. 4).

In contrast to this, the no good seedling with soil P' is not clamped at the leaf portion P1' by the clamping belt 47 to slip into the seedling drop down opening 42 by the force downwardly acting on the soil depositing portion P2' to be ejected to a path other than the transporting path of the good seedling with soil P, namely out of the system. Thus, the good seedling with soil P and the no good seedling with soil P' can be selected.

Then, the selected good seedling with soil P is supplied to the planting unit 25 from the transportation terminating end portion of the strip form transporting belt 39 via the seedling transfer conveyer E, and sequentially implanted to the farm field.

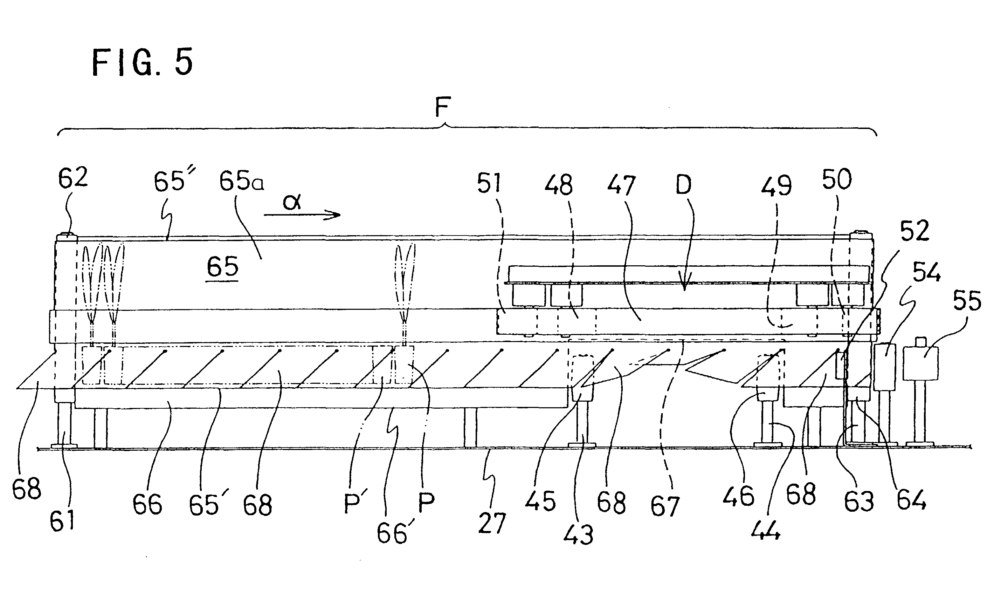

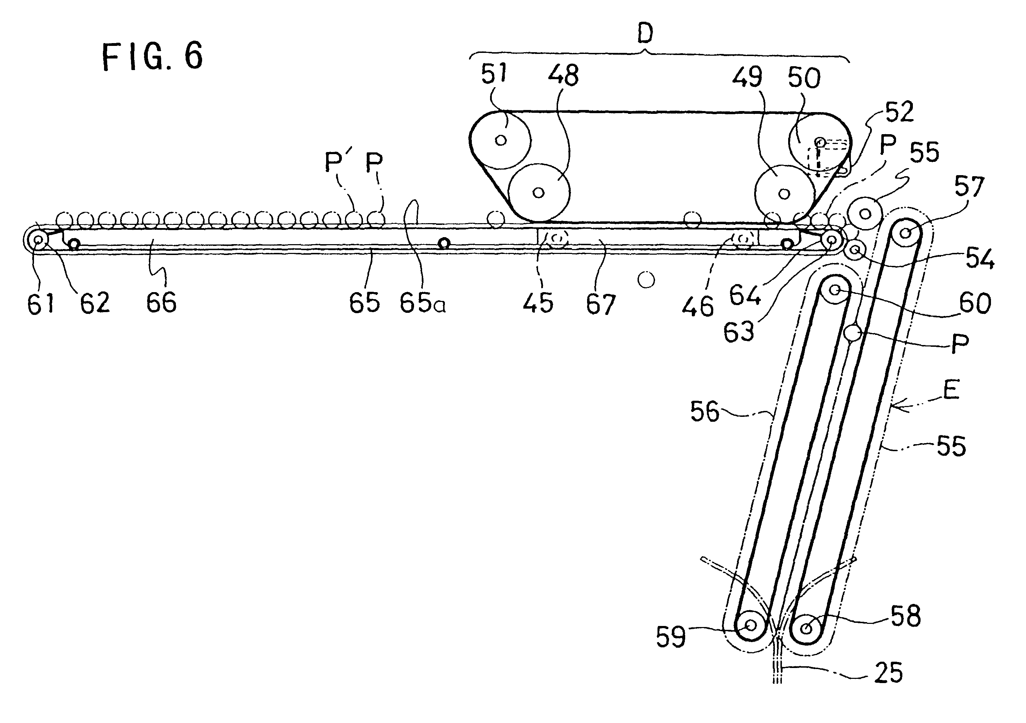

Next, discussion will be given hereinafter for second embodiment of the seedling with soil selecting and transporting apparatus according to the present invention, with reference to Figs. 5 and 6.

The second embodiment of the seedling with soil selecting and transporting apparatus is constructed by extending the strip form transporting belt 39 of the seedling with soil selecting and transporting conveyer C in the first embodiment, in the direction toward the transportation starting end to use as the strip form supply belt 32 of the seedling supplying conveyer B. In other words, the shown embodiment is differentiated from the construction of the first embodiment of the seedling with soil selecting and transporting apparatus, in that the strip form supply belt and the strip form transporting belt are formed with one belt member. Therefore, discussion will be given only for the different point, and like components to those in the first embodiment will be identified by like reference numerals to neglect discussion therefore in order to keep the disclosure simple enough for facilitating clear understanding of the present invention.

The seedling with soil selecting and transporting conveyer F is constructed by stretching a strip form transporting belt 65 of an elastic material, such as rubber or so forth, for example, between a belt stretching roller 62 mounted on a shaft 61 supported on substantially the same position on a machine frame as the shaft 28 of the strip form supply belt 32 of the seedling supply conveyer B and a belt stretching roller 64 mounted on a shaft 63 supported on the same position on the machine frame as the shaft 36 of the strip form transporting belt 39 of the seedling with soil selecting and transporting conveyer C. On the other hand, between the belt stretching rollers 62 and 64, a belt holding plate 66 is arranged below the upper traveling portion 65a of the strip form transporting belt 65 for supporting the upper traveling portion 65a to be a flat surface.

The belt holding plate 66 is a plate form member of rectangular shape in plan view. On one side edge 66', a seedling drop down opening 67 of channel shaped configuration in plan view similar to the seedling drop down opening 42, is formed.

Among both side edge portions 65' and 65" in the width direction of the strip form transporting belt 65, on one of the outer edge portion 65', a plurality of seedling with soil slip down pieces 68 ... of the same shape as the seedling with soil slip down piece 41, are formed.

Although the present invention has been illustrated and described with respect to exemplary embodiment thereof, it should be understood by those skilled in the art that the foregoing and various other changes, omissions and additions may be made therein and thereto, without departing from the spirit and scope of the present invention. Therefore, the present invention should not be understood as being limited to the specific embodiment set out above but to include all possible embodiments which can be embodied within a scope encompassed and equivalents thereof with respect to the feature set out in the appended claims.

Namely, in the foregoing embodiments, while the seedling with soil slip down pieces are formed on one of the outer side edge portions of the strip form transporting belt, and is deflected downwardly and obliquely to slip down the seedling with soil, it is possible to form one of the outer edge portions with an elastic member having large expansion ratio to only deflect downwardly and obliquely.

In this case, the seedling drop down opening permitting downward deflection of one of outer edge portion of the strip form transporting belt is formed on a part of the belt holding plate. On the other hand, slip down piece supporting roller assisting movement on the belt holding plate may be arranged within the seedling drop down opening, the downwardly deflected outer edge portion.

According to the invention, since a seedling with soil selecting and transporting apparatus for a transplanting machine, for transporting good seedling having leaf portion grown into a normal length and no good seedling having leaf portion not grown into a normal length, comprises a strip form transporting belt transporting good and no good seedling with soil in attitude fallen sideways in a condition concentrically mounting soil depositing portions on one outer side edge portion, and a clamping belt clamping leaf portions of good seedling with soil among the good and no good seedling mounted on the strip form transporting belt, and the strip form transporting belt having one outer side edge deflected downwardly for slipping down only no good seedling having leaf portions not clamped by the clamping belt, failure in operation will not be caused even at the occurrence of deposition of clump of earth. Also, even under external vibration or the slight disturbance in transporting attitude of the seedling with soil, the good seedling with soil and the no good seedling with soil can be steadily and certainly selected with simple structure.

Also, in the preferred construction, since a plurality of seedling with soil slip down pieces for mounting the good and no good seedling, are formed on the strip form transporting belt in a given interval, and the seedling with soil slip down piece deflects downwardly, the good seedling with soil and the no good seedling with soil can be certainly selected.

Also, according to the preferred construction, the seedling with soil slip down piece is formed with locating an end edge of the front side of a traveling direction of the strip transporting belt offsetting frontwardly than an outer end portion of a base end portion in the traveling direction. Therefore, the seedling with soil slip down piece can deflect the seedling with soil slip down piece along the outer periphery of the belt stretching roller, even when the seedling with soil slip down piece passes the belt stretching roller associating with traveling of the strip form transporting belt. Thus, even when other structural members are closely arranged in the vicinity of the belt stretching roller for compact construction, interference of traveling of the strip form transporting belt by the seedling with soil slip down piece or so forth can be successfully avoided.

In the further preferred construction, since a belt holding plate is provided for supporting an upper traveling portion of the strip form transporting belt mounting the good and no good seedling with soil, to be flat, and a seedling drop down opening permitting downward deflection of the seedling with soil slip down piece is formed in a part of the belt holding plate. Thus, the seedling with soil slip down piece can be deflected downwardly with simple construction.

Furthermore, the seedling with soil slip down piece mounting the good and no good seedling with soil may smoothly vary from the horizontal condition to the downwardly deflected condition and from downwardly deflected condition to the horizontal condition. Therefore, the attitude of the good seedling with soil mounted on the seedling with soil slip down piece is not disturbed.

In the preferred construction, a slip down piece supporting roller assisting movement of downwardly deflected seedling with soil slip down piece on the belt holding plate, is disposed within the seedling drop down opening. Therefore, the seedling with soil slip down piece may smoothly vary the condition from the downwardly deflected condition to the horizontal condition.

According to the preferred construction, a slip down piece supporting roller assisting movement of the seedling with soil slip down piece into the seedling drop down opening is disposed within the seedling drop down opening. Thus, the seedling with soil slip down piece can be smoothly varied the condition from the horizontal condition to the downwardly deflected condition.

According to the preferred construction, a strip form supply belt for supplying the seedling with soil to the strip form transporting belt is provided. Thus, good seedling with soil can be selected efficiently.

In the preferred construction, the strip form transporting belt and the strip form supply belt are formed by one belt member. Thus, the good and no good seedling with soil can be transferred in stepless fashion to reduce disturbance of attitude of the good seedling with soil.

Since the strip form transporting belt is formed of an elastic material, such as rubber or the like, which can be deformed elastically, the seedling with soil slip down piece can be easily formed. Accordingly, production cost can be lowered.

In the preferred embodiment, one outer edge portion of the strip form transporting belt is formed of an elastic material having large expansion ratio for causing elastic deformation by mounting the good and no good seedling with soil. The good and no good seedling with soil can be certainly and steadily selected without forming the seedling with soil slip down piece with further simple construction.

With the preferred embodiment, since a belt holding plate is provided for supporting an upper traveling portion of the strip form transporting belt mounting the good and no good seedling with soil, to be flat, and a seedling drop down opening permitting downward deflection of one of the outer side edge portion of the strip form transporting belt is formed in a part of the belt holding plate. Thus, the one of the outer side edge portion of the strip form transporting belt can be deflected downwardly with simple construction.

Furthermore, the one of the outer side edge portion of the strip form transporting belt may smoothly vary the attitude from the horizontal condition to the downwardly deflected condition and from downwardly deflected condition to the horizontal condition. Therefore, the attitude of one of the outer side edge portion of the strip form transporting belt can be smoothly varied from the deflected condition to the horizontal condition.

## Claims

1. A selecting and transporting apparatus for a transplantation machine which transplants seedlings (P, P') with soil and leaf portions (P1, P1'), comprising:
a strip form transporting belt (39) having two outer side edge portions (39', 39") located at both outer sides of said strip form transporting belt (39) in the width direction, for transporting said seedlings (P, P') mounted thereon in a condition fallen sideways while having arranged their soil sides, being mounted in soil depositing portions (P2, P2'), at one (39") of said outer side edge portions (39', 39") and their leaf portions (P1, P1') at the other one (39") of said outer side edge portions (39', 39"); and
at said other one outer side portion (39") of said strip form transporting belt (39), a clamping belt (47) for clamping leaf portions (P1) of transported seedlings (P) having leaf portions (P1) grown to a predetermined length and, thereby, for selecting them as good seedlings (P);
**characterized in that**
said one outer side edge portion (39') of said strip form transporting belt (39) is formed to be deflectable downwardly.

2. A selecting and transporting apparatus according to claim 1, wherein said one outer side edge portion (39') of said strip form transporting belt (39) comprises a plurality of seedling with soil slip down pieces (41) formed on said strip form transporting belt (39) in a given interval.

3. A selecting and transporting apparatus according to claim 2, wherein said seedling with soil slip down pieces (41) are formed having an end edge located at the front side and directed to a traveling direction (d) of said strip form transporting belt (39) offsetting forwardly with respect to an outer end portion of a base end portion in the traveling direction (d).

4. A selecting and transporting apparatus according to claim 2 or 3, further comprising a belt holding plate (40) supporting an upper traveling portion of said strip form transporting belt (39) so as to be flat, wherein a seedling drop down opening (42) permitting downward deflection of said seedling with soil slip down piece (41) is formed in a part of said belt holding plate (40).

5. A selecting and transporting apparatus according to claim 4, wherein a slip down piece supporting roller (45, 46) assisting movement of downwardly deflected seedling with soil slip down piece (41) on said belt holding plate (40) and/or into said seedling drop down opening (42) is disposed within said seedling drop down opening (42).

6. A selecting and transporting apparatus according to any of the preceding claims, further comprising a strip form supply belt (32) for supplying said seedlings (P, P') with soil to said strip form transporting belt (39).

7. A selecting and transporting apparatus according to claim 6, wherein said strip form transporting belt (39) and said strip form supply belt (32) are formed by one belt member.

8. A selecting and transporting apparatus according to any of the preceding claims, wherein said strip form transporting belt (39) is formed of an elastic material, such as rubber or the like, which can be deformed elastically.

9. A selecting and transporting apparatus according to any of the preceding claims, wherein said one outer side portion (39') of said strip form transporting belt (39) is formed of an elastic material having a large expansion ratio for causing elastic deformation by mounting said seedlings (P, P') with soil.

## Patentansprüche

1. Auswahl- und Transportvorrichtung für eine Umpflanzungsmaschine, die Sämlinge (P, P') mit Erde und mit Blattteilen (P1, P1') umpflanzt, welche Vorrichtung folgendes aufweist:
einen Streifenform-Transportriemen (39) mit zwei äußeren Seitenrandteilen (39', 39"), die an beiden Außenseiten des Streifenform-Transportriemens (39) in der Breitenrichtung angeordnet sind, zum Transportieren der Sämlinge (P, P'), die darauf in einem zur Seite gefallenen Zustand angebracht sind, während sie ihre Erdseiten, die in Erdablagerungsteilen (P2, P2') angebracht sind, an einem (39") der äußeren Seitenrandteile (39', 39") angeordnet haben, und ihre Blattteile (P1, P1') an dem anderen (39") der äußeren Seitenrandteile (39', 39"); und
am anderen äußeren Seitenteil (39") des Streifenform-Transportriemens (39) einen Klemmriemen (47) zum Klemmen von Blattteilen (P1) von transportierten Sämlingen (P) mit Blattteilen (P1), die zu einer vorbestimmten Länge gewachsen sind, und dadurch zum Auswählen von ihnen als gute Sämlinge (P);
**dadurch gekennzeichnet, dass**
der eine äußere Seitenrandteil (39') des Streifenform-Transportriemens (39) derart ausgebildet ist, dass er nach unten biegbar ist.

2. Auswahl- und Transportvorrichtung nach Anspruch 1, wobei der eine äußere Seitenrandteil (39') des Streifenform-Transportriemens (39) eine Vielzahl von Stücken (41) zum nach unten Gleiten lassen von Sämlingen mit Erde aufweist, die an dem Streifenform-Transportriemen (39) in einem gegebenen Intervall ausgebildet sind.

3. Auswahl- und Transportvorrichtung nach Anspruch 2, wobei die Stücke (41) zum nach unten Gleiten lassen von Sämlingen mit Erde mit einem Endrand, der an der Vorderseite angeordnet ist und zu einer Laufrichtung (α) des Streifenform-Transportriemens (39) ausgebildet sind, und zwar in Vorwärtsrichtung in Bezug auf einen äußeren Endteil eines Basisendteils in der Laufrichtung (α) versetzt.

4. Auswahl- und Transportvorrichtung nach Anspruch 2 oder 3, die weiterhin eine Riemen-Halteplatte (40) aufweist, die einen oberen Laufteil des Streifenform-Transportriemens (39) stützt, um flach zu sein, wobei eine Öffnung (42) zum Herunterfallen lassen von Sämlingen, die eine Biegung des Stücks (41) zum Gleiten lassen nach unten von Sämlingen mit Erde nach unten zulässt, in einem Teil der Riemen-Halteplatte (40) ausgebildet ist.

5. Auswahl- und Transportvorrichtung nach Anspruch 4, wobei eine Rolle (45, 46) zum Unterstützen des Stücks zum Gleiten lassen nach unten, die eine Bewegung eines nach unten gebogenen Stücks (41) zum Gleiten lassen nach unten von Sämlingen mit Erde auf der Riemen-Halteplatte (40) und/oder in die Öffnung (42) zum Herunterfallen lassen von Sämlingen unterstützt, innerhalb der Öffnung (42) zum Herunterfallen lassen von Sämlingen angeordnet ist.

6. Auswahl- und Transportvorrichtung nach einem der vorangehenden Ansprüche, die weiterhin einen Streifenform-Zufuhrriemen (32) zum Zuführen der Sämlinge (P, P') mit Erde zum Streifenform-Transportriemen (39) aufweist.

7. Auswahl- und Transportvorrichtung nach Anspruch 6, wobei der Streifenform-Transportriemen (39) und der Streifenform-Zufuhrriemen (32) durch ein Riemenelement ausgebildet sind.

8. Auswahl- und Transportvorrichtung nach einem der vorangehenden Ansprüche, wobei der Streifenform-Transportriemen (39) aus einem elastischen Material, wie beispielsweise Gummi oder ähnlichem, ausgebildet ist, das elastisch deformiert werden kann.

9. Auswahl- und Transportvorrichtung nach einem der vorangehenden Ansprüche, wobei der eine äußere Seitenteil (39') des Streifenform-Transportriemens (39) aus einem elastischen Material mit einem großen Expansionsverhältnis zum Veranlassen einer elastischen Deformation durch Anbringen der Sämlinge (P, P') mit Erde ausgebildet ist.

## Revendications

1. Un appareil de sélection et de transport pour une machine de transplantation qui transplante des semis (P, P') avec des portions de terre et de feuille (P1, P1'), comprenant :
une courroie de transport en forme de bande (39) ayant deux portions en bordure latérale extérieure (39', 39") situées au niveau des deux côtés extérieurs de ladite courroie de transport en forme de bande (39) dans la direction de la largeur, pour transporter lesdits semis (P, P') montés dessus dans un état tombé de côté tout en ayant leurs côtés terre disposés, étant montés dans des portions de dépôt en terre (P2, P2'), au niveau d'une (39") desdites portions en bordure latérale extérieure (39', 39") et leurs portions de feuille (P1, P1') au niveau de l'autre (39") desdites portions en bordure latérale extérieure (39', 39") ; et
au niveau de l'autre portion latérale extérieure (39") de ladite courroie de transport en forme de bande (39), une courroie de serrage (47) pour serrer des portions de feuille (P1) de semis transportés (P) ayant des portions de feuille (P1) ayant poussé jusqu'à une longueur prédéterminée et. ainsi, pour les sélectionner comme bons semis (P) ;
**caractérisé en ce que**
ladite première portion en bordure latérale extérieure (39') de ladite courroie de transport en forme de bande (39) est formée pour pouvoir être fléchie vers le bas.

2. Un appareil de sélection et de transport selon la revendication 1, dans lequel ladite première portion en bordure latérale extérieure (39') de ladite courroie de transport en forme de bande (39) comprend une pluralité de pièces de glissement descendant de semis avec ferre (41) formée sur ladite courroie de transport en forme de bande (39) à un intervalle donné.

3. Un appareil de sélection et de transport selon la revendication 2, dans lequel lesdites pièces de glissement descendant de semis avec terre (41) sont formées ayant un bord terminal situé au niveau du côté avant et dirigé vers une direction de déplacement (α) de ladite courroie de transport en forme de bande (39), opérant un décalage vers l'avant par rapport à une portion terminale extérieure d'une portion terminale de base dans la direction de déplacement (α).

4. Un appareil de sélection et de transport selon la revendication 2 ou 3, comprenant en outre une plaque de maintien de courroie (40) supportant une portion de déplacement supérieure de ladite courroie de transport en forme de bande (39) afin qu'elle soit plate, dans lequel une ouverture de largage de semis (42) permettant le fléchissement vers le bas de ladite pièce de glissement descendant de semis avec terre (41) est formée dans une partie de ladite plaque de maintien de courroie (40).

5. Un appareil de sélection et de transport selon la revendication 4, dans lequel un rouleau de soutien de la pièce de glissement descendant (45, 46) assistant le mouvement de fléchissement vers le bas de la pièce de glissement descendant de semis avec terre (41) sur ladite plaque de maintien de courroie (40) et/ou dans ladite ouverture de largage de semis (42) est disposé à l'intérieur de ladite ouverture de largage de semis (42).

6. Un appareil de sélection et de transport selon l'une quelconque des revendications précédentes, comprenant en outre une courroie d'amenée en forme de bande (32) pour amener lesdits semis (P, P') avec terre à ladite courroie de transport en forme de bande (39).

7. Un appareil de sélection et de transport selon la revendication 6, dans lequel ladite courroie de transport en forme de bande (39) et ladite courroie d'amenée en forme de bande (32) sont formées par un élément de courroie.

8. Un appareil de sélection et de transport selon l'une quelconque des revendications précédentes, dans lequel ladite courroie de transport en forme de bande (39) est formée en un matériau élastique, tel que du caoutchouc ou autre matériau similaire, qui peut être déformé élastiquement.

9. Un appareil de sélection et de transport selon l'une quelconque des revendications précédentes, dans lequel ladite première portion latérale extérieurs (39') de ladite courroie de transport en forme de bande (39) est formée en un matériau élastique ayant un fort rapport d'expansion pour causer une déformation élastique en montant lesdits semis (P, P') avec terre.
